Europäisches Patentamt

European Patent Office

Office européen des brevets

(11) Veröffentlichungsnummer: **0 402 527**
**A2**

(12) # EUROPÄISCHE PATENTANMELDUNG

(21) Anmeldenummer: **89122884.3**

(22) Anmeldetag: **12.12.89**

(51) Int. Cl.5: **G01B 11/06, G01B 7/10**

(30) Priorität: **12.06.89 DE 3919131**

(43) Veröffentlichungstag der Anmeldung:
**19.12.90 Patentblatt 90/51**

(84) Benannte Vertragsstaaten:
**DE FR GB IT SE**

(71) Anmelder: **TZN Forschungs- und Entwicklungszentrum Unterlüss GmbH Neuensothriether Strasse 20 3104 Unterlüss(DE)**

(72) Erfinder: **Claren, Theo Rebhuhnweg 11 D-3100 Celle-Garssen(DE)**
Erfinder: **Heinrich, Jürgen Lotharstrasse 28 D-3102 Herrmannsburg(DE)**

(74) Vertreter: **Podszus, Burghart, Dipl.-Phys. Rheinmetall GmbH Ulmenstrasse 125 Postfach 6609 D-4000 Düsseldorf(DE)**

(54) Vorrichtung und Verfahren zur berührungslosen Messung der Schichtdicke eines nichtleitenden Materials sowie Verwendung der Vorrichtung zur Messung kunststoffbeschichteter Metallteile.

(57) Die Erfindung betrifft eine Vorrichtung zur berührungslosen Messung der Schichtdicke d eines nichtleitenden Materials (2), welches auf einem Trägermaterial (1) angeordnet ist, mit einem Sensor (3).

Um zu erreichen, daß einerseits die Genauigkeit der Schichtdickenmessung weitgehend unabhängig von der jeweiligen Position des Sensors (3) ist daß und andererseits die Nachteile von Ultraschallmeßgeräten bzw. von Verfahren, die ionisierende Strahlen verwenden, nicht auftreten, wird vorgeschlagen, daß der Sensor (3) zwei Abstandssensoren (31, 32; 33) enthält. Dabei mißt der erste Abstandssensor (31, 32) Signale, die charakteristisch sind für den Abstand $a_1$ zwischen Sensor (3) und der dem Sensor (3) zugewandten Oberfläche der nichtleitenden Schicht (2). Der zweite Abstandssensor (33) mißt hingegen Signale, die charakteristisch sind für den Abstand $a_2$ zwischen dem Sensor (3) und der dem Sensor (3) zugewandten Oberfläche des Trägermaterials (1). Die Schichtdicke d ergibt sich dann aus der Beziehung $d = a_2 - a_1$.

Als erster Sensor (31, 32) wird vorteilhafterweise ein optischer und als zweiter Sensor (33) ein Wirbelstromsensor verwendet, wobei es sich bei Verwendung des Wirbelstromsensors bei dem Trägermaterial (1) um ein elektrisch leitendes Material handeln muß.

FIG.1

## Vorrichtung und Verfahren zur berührungslosen Messung der Schichtdicke eines nichtleitenden Materials sowie Verwendung der Vorichtung zur Messung kunststoffbeschichteter Metallteile.

Die Erfindung betrifft eine Vorrichtung zur berührungslosen Messung der Schichtdicke eines nichtleitenden Materials, wie sie im Oberbegriff des Anspruchs 1 näher spezifiziert ist. Ferner bezieht sich die Erfindung auf ein Verfahren zur Kalibrierung des in der Vorrichtung vorzugsweise verwendeten Wirbelstromsensors und auf die Verwendung des Verfahrens bei der Schichtdickenmessung von kunststoffbeschichteten Metallteilen.

Es ist bekannt, zur Schichtdickenmessung ionisierende Strahlen zu verwenden. Dabei wird im wesentlichen die Absorption durch das entsprechende Material gemessen und daraus die Schichtdicke ermittelt. Dieses bekannte Verfahren hat den Nachteil, daß häufig - im Hinblick auf die verwendeten Strahlen - entsprechende Schutzmaßnahmen vorgesehen werden müssen. Außerdem kann es u. U. zu einer Schädigung des Meßgutes kommen.

Bekannt sind ferner Ultraschallmeßverfahren zur Schichtdickenmessung, die allerdings den Nachteil besitzen, daß ständig ein Ankoppelmedium, z. B. Wasser, zugeführt werden muß. Außerdem hängt die Genauigkeit dieses Meßverfahrens stark von den evtl. Schallgeschwindigkeitsänderungen des Meßgutes ab.

Als bekannt können auch Verfahren gelten, bei denen die Schichtdicke aus zwei Abstandsmessungen ermittelt werden. Dabei wird zunächst der Abstand zwischen Sensor und einer Referenzplatte und anschließend - bei unveränderter Position des Sensors und der Referenzplatte - der Abstand zwischen Sensor und Oberfläche des auf die Referenzplatte aufgebrachten Meßgutes gemessen. Dieses Verfahren besitzt den großen Nachteil, daß bei der gesamten Messung die Position des Sensors in bezug auf die Referenzplatte exakt konstant gehalten werden muß.

Aufgabe der vorliegenden Erfindung ist es, eine Vorrichtung der eingangs erwähnten Art so weiterzuentwickeln, daß einerseits die Genauigkeit der Schichtdickenmessung weitgehend unabhängig von der jeweiligen Position des Sensors ist. Andererseits sollen die Nachteile der Ultraschallmessung bzw. der Verfahren, die ionisierende Strahlen verwenden, vermieden werden.

Diese Aufgabe wird erfindungsgemäß durch die Merkmale des kennzeichnenden Teiles des Anspruchs 1 gelöst.

Vorteilhafte Ausgestaltungen der Vorrichtung werden in den Unteransprüchen 2 und 3 wiedergegeben.

Anspruch 4 offenbart ein vorteilhaftes Verfahren zur Kalibrierung eines vorzugsweise in der erfindungsgemäßen Vorrichtung zu verwendenden Wirbelstromsensors.

Ferner wird mit Anspruch 7 die Verwendung der erfindungsgemäßen Vorrichtung zur Messung an kunststoffbeschichteten Metallteilen und mit Anspruch 8 ein besonders vorteilhaftes Verfahren zur berührungslosen Messung der Schichtdicke mit der Vorrichtung nach Anspruch 1 beansprucht.

Die Erfindung beruht also im wesentlichen auf dem Gedanken, die Schichtdicke eines nichtleitenden Materials dadurch zu bestimmen, daß der Schichtdickensensor zwei Abstandssensoren enthält, die auf unterschiedlichen physikalischen Prinzipien beruhen. Dabei soll der eine Abstandssensor den Abstand zwischen Sensor und Oberfläche der nichtleitenden Schicht und der zweite Sensor den Abstand zwischen Sensor und Referenzplatte bestimmen. Die Sensoren sind also so zu wählen, daß der erste Sensor möglichst nur Signale auswertet, die von der Oberfläche der nichtleitenden Schicht stammen und der zweite Abstandssensor sollte nur Signale empfangen, die von der Oberfläche des Trägermaterials stammen und die durch das nichtleitende Material möglichst nicht verfälscht werden.

Dieses kann beispielsweise dadurch erreicht werden, daß der erste Abstandssensor ein optischer Triangulationssensor und der zweite Abstandssensor ein Wirbelstromsensor ist.

Weitere Einzelheiten und Vorteile werden im folgenden anhand eines Ausführungsbeispieles und mit Hilfe von Figuren beschrieben.

Es zeigen:

Fig. 1 eine erfindungsgemäße Vorrichtung zur berührungslosen Messung einer auf einem Trägermaterial angeordneten, nichtleitenden Schicht;

Fig. 2 die Kalibrierung eines Wirbelstromsensors und

Fig. 3 die Position eines Sensors mit integriertem Wirbelstromsensor bei Durchführung der Abstandsmessung.

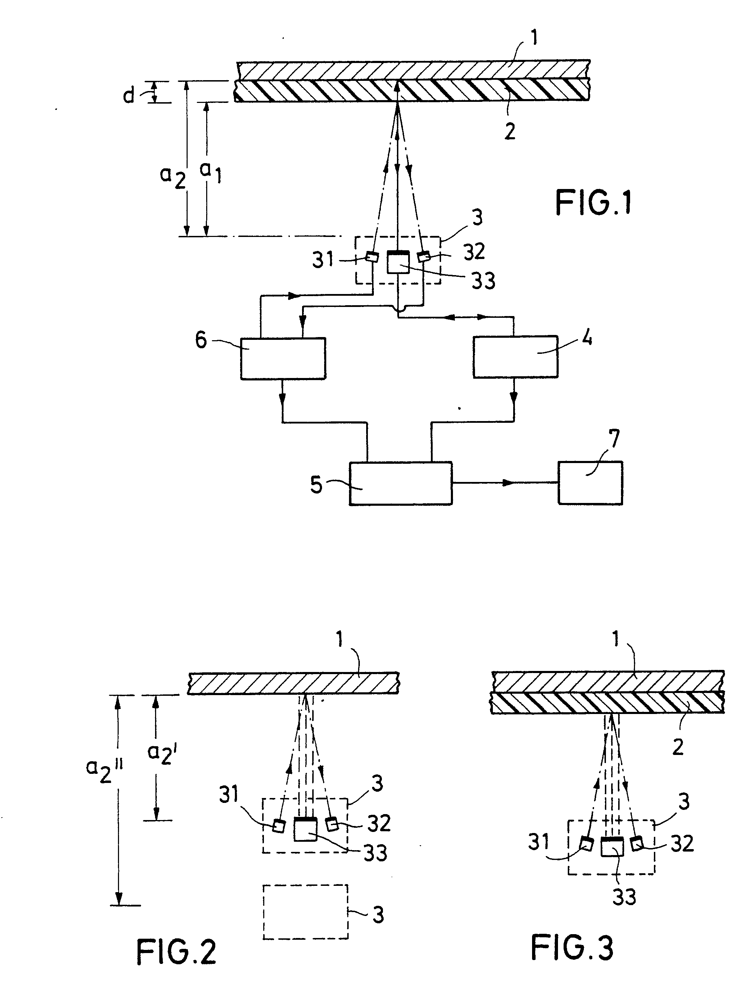

In Fig. 1 ist mit 1 ein Trägermaterial, beispielsweise ein Blech und mit 2 ein nichtleitendes Material, beispielsweise eine PVC-Schicht, deren Dicke ermittelt werden soll, bezeichnet.

Mit 3 ist ein Sensor gekennzeichnet, der zwei Abstandssensoren enthält. Der erste Abstandssensor besteht beispielsweise aus einer Lasersendeeinheit 31 und einer Laserempfangseinheit 32 und der zweite Abstandssensor aus einem Wirbelstromsensor 33. Mit der Lasersendeeinheit 31 kann beispielsweise ein Meßpunkt oder eine Linie auf die zu vermessende Fläche projiziert werden und dann das reflektierte Licht mit Hilfe der Laserempfangseinheit 32 detektiert werden.

Mit dem Wirbelstromsensor 33 ist eine Ansteuer- und Auswerteeinheit 4 verbunden, deren Ausgangssignale einem Rechner 5 zugeführt werden. Auch der aus der Lasersendeeinheit 31 und der Laserempfangseinheit 32 bestehende Abstandssensor ist über eine Ansteuer- und Auswerteeinheit 6 mit dem Rechner 5 verbunden. Dem Rechner 5 ist u. a. eine Anzeigeneinheit 7 nachgeschaltet.

Im folgenden wird kurz auf die Wirkungsweise der Vorrichtung gemäß Fig. 1 eingegangen. Nachdem der Sensor 3 in die entsprechende Meßposition gebracht wurde, werden die Abstandssensoren vorzugsweise gleichzeitig mittels den Ansteuer- und Auswerteeinheiten 4 und 6 aktiviert. Der zweite Sensor 33 ermittelt den Abstand $a_2$ zwischen dem Sensor 3 und der dem Sensor zugewandten Oberfläche des Trägermaterials 1 (bei Verwendung eines Wirbelstromsensors hat die Kunststoffschicht praktisch keinen Einfluß auf das Meßergebnis). Der erste Sensor 31, 32 ermittelt den Abstand $a_1$ zwischen dem Sensor 3 und der dem Sensor zugewandten Oberfläche der Schicht 2 (bei den an sich bekannten Triangulationssensoren wird hierzu die Ablenkung auf der Laserempfangseinheit 32 ermittelt). Die entsprechenden Abstandswerte $a_1$ und $a_2$ werden in den Ansteuer und Auswerteeinheiten 6 und 4 ermittelt und dann an den Rechner 5 weitergeleitet. Der Rechner führt die Differenzbildung durch und stellt entsprechende Ausgangssignale zur Verfügung. Beispielsweise kann die Schichtdikke direkt an einem Meßgerät 7 angezeigt werden.

Bei der Verwendung von Wirbelstromsensoren ist häufig vor der eigentlichen Messung eine Kalibrierung dieses Sensors erforderlich. Eine derartige Kalibrierung wird mit Hilfe von Fig. 2 im folgenden kurz beschrieben:

Der Sensor 3 wird in dem Abstandsmeßbereich vor dem Blech 1 (ohne Schicht 2) positioniert, in dem er später die Schichtdicke messen soll. Dann werden bei mehreren Abstandspositionen $a_2'$ $a_2''$ des Sensors 3 vor dem Blech 1 die Sensordaten des Wirbelstromsensors 33 ermittelt. Die entsprechenden Werte können in der Ansteuer- und Auswerteeinheit 4 oder in dem Rechner 5 abgelegt werden, so daß später bei der eigentlichen Schichtdickenmessung jedem Wirbelstromwert ein entsprechender Abstandswert zugeordnet ist. Da man zweckmäßigerweise den Meßbereich so wählt, daß er in dem vom Hersteller des Sensors angegebenen linearen Bereich des Sensors liegt, genügt für die Kalibrierung in der Regel die entsprechende Messung bei drei unterschiedlichen Abstandspositionen des Sensors. Zwischenwerte können dann durch Interpolation (die. z. B. der Rechner 5 durchführt) gewonnen werden. Die Abstandsmessung erfolgt bei der Kalibrierung des Wirbelstromsensors 33 mit Hilfe des optischen Abstandssensors 31, 32.

Mechanische Schwingungen des Trägermaterials 1 als auch des Sensors 3 können durch das sehr schnelle Ansprechverhalten der Sensoren eliminiert werden. Die Frequenzen der mechanischen Schwingungen müssen jedoch kleiner als die elektrische Bandbreite des Sensorsystems sein (Blitzlichtaufnahme).

Soll die Schichtdickenmessung an verschiedenen Stellen der Oberfläche der Schicht durchgeführt werden und ist nicht sichergestellt, daß das Trägermaterial an allen Stellen die gleichen physikalischen Eigenschaften hat, so muß an jeder Meßposition eine Kalibrierung des Wirbelstromsensors vorgenommen werden und die entsprechenden Kalibrierdaten für den jeweiligen Meßpunkt abgespeichert werden.

Nachdem die Kalibrierung durchgeführt wurde, kann die Kunststoffschicht 2 auf das Trägermaterial 1 aufgebracht werden und mit Hilfe einer in Fig. 3 nicht dargestellten Verstelleinheit an die entsprechende Meßposition gebracht werden. Mit Hilfe des optischen Abstandssensors 31, 32 wird dann der Abstand Sensor/Schichtoberfläche bestimmt. Durch die vorhergehende Kalibrierung des Wirbelstromsensors 33 kann dieser nun den Abstand Sensor 3/Trägermaterial 1 bestimmen. Hierbei kann die Positioniergenauigkeit der Verstelleinheit in der Regel vernachlässigt werden. Über die Differenz der beiden Meßwerte kann die Schichtdicke d bestimmt werden. Der gesamte Meßvorgang, bestehend aus der Kalibrierung und der eigentlichen Schichtdickenmessung kann vollautomatisch durchgeführt werden.

Eine vorteilhafte Anwendung des vorstehend beschriebenen Meßverfahrens ist die Überprüfung der PVC-Schicht im Unter bodenbereich von PKW-Karosserien. Denn hierbei besteht das Problem, möglichst noch während des Spritzvorganges mit Hilfe eines Dickenmeßgerätes die Schichtdicke des PVC zu messen. Da das PVC nach dem Aufbringen noch naß ist, muß es sich um ein berührungsloses Schichtdickenmeßverfahren handeln.

Die Kalibrierung des Wirbelstromsensors erfolgt - wie oben beschrieben - vor Aufbringung der PVC-Schicht an ausgewählten und vom Hersteller vorgegebenen Meßpositionen. Nach Abspeicherung der entsprechenden Kalibrierdaten wird die PVC-Schicht aufgebracht und an den entsprechenden Meßpositionen die Schichtdicke gemessen.

Selbstverständlich kann die erfindungsgemäße Vorrichtung auch so eingesetzt werden, daß nach der Kalibrierung des Wirbelstromsensors 33 der Sensor 3 nach dem Aufbringen der Schicht 2 in einen vorgegebenen Abstand $a_2$ von dem Trägermaterial 1 gebracht wird und dann bei dieser Position lediglich noch mit dem optischen Sensor 31, 32 der Abstand zwischen Sensor 3 und der Oberfläche der Schicht gemessen wird. Für die Einstellung des Sensors 3 auf den vorgegebenen Abstand $a_2$ kann die nicht dargestellte Verstelleinheit über eine Regelschleife mit dem Wirbelstromsensor 33 gekoppelt werden, so daß die Verstelleinheit den Sensor 3 von einer Ausgangsposition aus solange verschiebt, bis der Meßwert des Wirbelstromsensors gleich dem Meßwert ist, der beim Kalibrierungsvorgang dem entsprechenden Abstandswert zugeordnet wurde.

Bezugszeichenliste

1 Trägermaterial
2 nichtleitendes Material
3 Sensor
    31 Lasersendeeinheit
    32 Laserempfangseinheit
    33 Abstandssensor, Wirbelstromsensor
4 Ansteuer- und Auswerteeinheit für den zweiten Abstandssensor
5 Rechner
6 Ansteuer- und Auswerteeinheit für den ersten Abstandssensor (31, 32)
7 Anzeigeneinheit

**Ansprüche**

1. Vorrichtung zur berührungslosen Messung der Schichtdicke d eines nichtleitenden Materials (2) welches auf einem Trägermaterial (1) angeordnet ist, mit einem Sensor (3), **dadurch gekennzeichnet,**
- daß der Sensor (3) zwei Abstandssensoren (31, 32; 33) enthält, wobei der erste Abstandssensor (31, 32) Signale mißt, die charakteristisch sind für den Abstand $a_1$ zwischen Sensor (3) und der dem Sensor (3) zugewandten Oberfläche der nichtleitenden Schicht (2),
- daß der zweite Abstandssensor (33) Signale mißt, die charakteristisch sind für den Abstand $a_2$ zwischen dem Sensor (3) und der dem Sensor (3) zugewandten Oberfläche des Trägermaterials (1) und
- daß die Schichtdicke d aus der Beziehung
$$d = a_2 - a_1$$
bestimmt wird.

2. Vorrichtung nach Anspruch 1, **dadurch gekennzeichnet,** daß der erste Sensor (31, 32) ein optischer und der zweite Sensor (33) ein Wirbelstromsensor ist, wobei es sich bei dem Trägermaterial (1) um ein elektrisch leitendes Material handelt.

3. Vorrichtung nach Anspruch 2, **dadurch gekennzeichnet,** daß der optische Sensor (31, 32) ein Triangulationssensor ist.

4. Verfahren zur Kalibrierung des Wirbelstromsensors nach Anspruch 2 oder 3, **dadurch gekennzeichnet,** daß vor Aufbringung der zu messenden Schicht (2) auf das Trägermaterial (1) an den entsprechenden Meßpositionen die Ausgangssignale des Wirbelstromsensors (33) in Abhängigkeit von der Entfernung ($a_2'$, $a_2''$ ....) des Sensors (3) von dem Trägermaterial (1) ermittelt und gespeichert werden.

5. Verfahren nach Anspruch 4, **dadurch gekennzeichnet,** daß zur Abstandsbestimmung der optische Sensor (31, 32) verwendet wird.

6. Verfahren nach Anspruch 4 oder 5, **dadurch gekennzeichnet,** daß die Zeit, während der die optische Abstandsmessung durchgeführt wird, geringer ist, als die Periodendauer der bei den Messungen evtl. auftretenden Vibrationsschwingungen von Sensor und Trägermaterial

7. Verwendung der Vorrichtung nach Anspruch 1, 2 oder 3 zur Schichtdickenmessung kunststoffbeschichteter Metallteile.

8. Verfahren zur berührungslosen Messung der Schichtdicke eines nichtleitenden Materials mit der Vorrichtung nach Anspruch 1, **dadurch gekennzeichnet,** daß der Sensor (3) mit Hilfe des zweiten Abstandssensors (33) in einen vorgegebenen Abstand ($a_2$) von dem Trägermaterial (1) gebracht wird, und daß dann bei dieser Position mit dem ersten Sensor der Abstand ($a_1$) zwischen Sensor (3) und der dem Sensor (3) zugewandten Oberfläche der nichtleitenden Schicht (2) gemessen wird.

FIG.1

FIG.2

FIG.3